# EUROPÄISCHE PATENTANMELDUNG

(11) **EP 3 772 499 A1**
(43) Veröffentlichungstag der Anmeldung: **10.02.2021**
(21) Anmeldenummer: 19190244.4
(22) Anmeldetag: 06.08.2019
(51) Int. Cl.: C04B 35/80, C04B 35/581, C04B 35/591

(54) **ENTWICKLUNG EINES ANISOTROPEN WERKSTOFFS MIT HOHER WÄRMELEITFÄHIGKEIT AUS OXIDISCHEM CMC DURCH NITRIDIERUNG VON AL2O3**

(71) Anmelder: Siemens Healthcare GmbH, 91052 Erlangen (DE)
(72) Erfinder: DEURINGER, Josef, 91074 Herzogenaurach (DE); LAMPENSCHERF, Stefan, 85586 Poing (DE); WALTER, Steffen, 85667 Oberpframmern (DE)

(57) **Zusammenfassung**

Die vorliegende Erfindung betrifft einen Verbundwerkstoff umfassend Aluminiumnitrid und/oder Aluminiumoxynitrid, ein Verfahren zur Herstellung eines solchen Verbundwerkstoffes, ein Bauteil umfassend den Verbundwerkstoff, sowie die Verwendung des erfindungsgemäßen Verbundwerkstoffs zur Abfuhr von Wärme in einem Bauteil.

## Beschreibung

Die vorliegende Erfindung betrifft einen Verbundwerkstoff umfassend Aluminiumnitrid und/oder Aluminiumoxynitrid, ein Verfahren zur Herstellung eines solchen Verbundwerkstoffes, ein Bauteil umfassend den Verbundwerkstoff, sowie die Verwendung des erfindungsgemäßen Verbundwerkstoffs zur Abfuhr von Wärme in einem Bauteil.

Im Halbleiterbau, der Leistungs- und Mikroelektronik und in der Hochleistungselektronik wird Aluminiumnitrid (AlN) eingesetzt, da es eine hervorragende Wärmeleitfähigkeit (180 W/mK), exzellente elektrische Isolationsfähigkeit (1.1012 Ohm*cm)und einen niedrigen thermischen Ausdehnungskoeffizienten (4-6 * 10-6 1/K) besitzt.

Für den Einsatz in der Leistungs- und Mikroelektronik wird Aluminiumnitrid als Substrat für Schaltungsträger im Halbleiterbau oder als Kühlkörper für die Hochleistungselektronik eingesetzt. Für die Herstellung von Substraten werden vor allem DCB (Direct Copper Bond: Substrate aus Al₂O₃ und Kupfer zusammengefügt, wobei Al₂O₃ eine isolierende und Kupfer eine leitende Funktion aufweist) verwendet, die im industriellem Maßstab durch physikalische Abscheideverfahren (z.B. physikalische Gasphasenabscheidung, PVD), Sputtern oder durch metallorganische chemische Gasphasenabscheidung (metal-organic chemical vapour deposition, MOCVD) als Dünnschichten auf Kupferblechen aufgebracht werden.

Die Fertigung von Kühlkörpern erfolgt dabei gewöhnlich über die klassische keramische Pulverroute. Dafür werden AlN-Pulver in Schlickern verarbeitet und dieser in entsprechende Formen gegossen. Nach dem Trocknen der AlN-Formkörper werden diese üblicherweise bei Temperaturen zwischen 1800 und 2000°C drucklos gesintert. Mit Hilfe von Sinteradditiven (z.B. Dotierungen von Kalzium- und Yttriumoxid) kommt es zum Flüssigphasensintern, was mit einer Erniedrigung der Sintertemperatur einhergeht.

Jedoch zeigen zum Beispiel Kühlkörper, die über klassische keramische Formgebungsverfahren (Pulver - Formgebung - Trocknen - Sintern) hergestellt werden, isotrope Eigenschaften, und die Wärme(ab)leitung wirkt beispielsweise in alle drei Raumrichtungen gleich. Vor allem in der Hochleistungselektronik ist es jedoch von Vorteil, die Wärmeableitung zielgerichtet über einen anisotropen Werkstoff abführen zu können.

Bei keramischen Kühlkörpern aus AlN, deren Wärmeleitung isotrop erfolgt, wird der Wärmeabtransport üblicherweise über Flüssigkeiten (Öle oder Wasser) geregelt. Das ist zwar eine effiziente Form des Wärmeabtransports, benötigt jedoch viel Platz und Bauraum für Pumpen und Flüssigkeitsbehälter.

Beispielswiese führen Gleichrichterplatinen zur Schaltung von Spannungen >100kV in Hochleistungsröntgenröhren vor allem im Dauerbetrieb zu einer starken Überhitzungen und zum frühzeitigem Abschalten im Röntgenbetrieb. Der heutige Lösungsansatz besteht darin, Reihen von 4-6 Gleichrichterplatinen in einer hermetisch dichten Wanne in Öl zu lagern. Das Öl dient hierbei dem Abtransport der Wärme. Nachteilig sind hierbei eine komplexe Bauform mit Öl-Ausgleichsbehälter und ein hoher Platzbedarf.

Ein weiteres Beispiel des Stands der Technik sind Trafos in Röntgenanlagen, in welchen zwischen der Primär- und der Sekundärwicklung sehr hohe Temperaturen entstehen können, die bei Überhitzung zum vorzeitigen Abbruch der Messung führen können. Der derzeit verwendete Lösungsansatz ist, den Isolationsbereich zwischen Primär- und Sekundärwicklung mit Öl zu füllen, um die hohen thermischen Energien abzutransportieren. Hierbei sind jedoch die komplexe Bauform mit Öl-Ausgleichsbehälter sowie der hohe Platzbedarf von Nachteil. Bei der Herstellung von dünnen Substraten in Abhängigkeit der angewendeten Abscheidetechnik können anisotrope AlN-Schichten erzeugt werden, die in c-Achsrichtung eine deutlich höhere Wärmeleitfähigkeit besitzen, als in a- und b-Achsrichtung. Keramische AlN-Formkörper, die über die klassische Pulverroute gefertigt werden, zeigen dagegen isotropes Wärmeleitfähigkeitsverhalten in alle Achsrichtungen. Solche dünnen Substrate weisen jedoch üblicherweise für beispielsweise keramische Kühlkörper keine ausreichende Wandstärke auf. Außerdem sind solche dünnen Substrate nicht ausreichend, um große Wärmemengen zu transportieren.

Eine gerichtete Wärmeableitung würde insbesondere für Kühlkörper einen gesteuerten Wärmetransport und eine entsprechende Wärmeabgabe an die Umgebung ermöglichen und erlauben, Baugruppen zu verkleinern. Dies würde letztendlich zur kompakteren Bauweise von Anlagen führen, da nun Peripheriegeräte wie Pumpen und Flüssigkeitsbehälter wegfallen können.

Die Erfinder haben gefunden, dass eine gerichtete anisotrope Wärmeleitung durch eine gezielte carbothermische Reduktion mit anschließender Nitridierung von CMC (Ceramic Matrix Composites; keramischem Faserverbundwerkstoff) erreicht werden kann. CMCs sind faserverstärkte Verbundwerkstoffe aus Keramik, die gewöhnlich aus einer Faser und einer Matrixkomponente bestehen.

Weitere Aspekte der vorliegenden Erfindung sind den abhängigen Ansprüchen und der detaillierten Beschreibung zu entnehmen.

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.
Figuren 1 und 2 zeigt schematisch beispielhafte erfindungsgemäße Verbundwerkstoffe.
Den Figuren 3 bis 6 sind schematisch beispielhafte erfindungsgemäße Verfahren zu entnehmen.
Figur 7 zeigt schematisch ein beispielhaftes erfindungsgemäßes Bauteil.

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Die Leistungselektronik ist ein Teilgebiet der Elektrotechnik, das sich mit der Umformung elektrischer Energie mit schaltenden elektronischen Bauelementen beschäftigt. Beispielhafte Anwendungen sind Umrichter oder Frequenzumrichter, etwa im Bereich der elektrischen Antriebstechnik, Solarwechselrichter und Umrichter für Windkraftanlagen oder Schaltnetzteile.

Die Hochleistungselektronik erfordert im Vergleich zur Leistungselektronik höhere Ströme und Spannungen. Beispielhafte Anwendungen sind hierbei Motorantriebe und Hybridelektrofahrzeug-Antriebsstränge. Damit gehen üblicherweise eine höhere Wärmeabgabe sowie ein Bedarf an dickeren Verbindungsleitungen einher.

Die Mikroelektronik betrifft den Entwurf, die Entwicklung und die Herstellung von miniaturisierten, elektronischen Schaltungen, insbesondere integrierten Schaltungen.

Mengenangaben im Rahmen der vorliegenden Erfindung beziehen sich auf Gew.%, soweit nicht anderweitig angegeben oder aus dem Kontext ersichtlich ist.

In einem ersten Aspekt betrifft die vorliegende Erfindung einen Verbundwerkstoff, umfassend zumindest eine Faser, welche zumindest teilweise Aluminiumnitrid und/oder Aluminiumoxynitrid umfasst, sowie eine Matrix, welche zumindest teilweise ein Metallnitrid und/oder ein Metalloxynitrid umfasst, wobei das Metall ausgewählt ist aus Aluminium und/oder Silizium.

Die mindestens eine Faser ist in ihrer Ausgestaltung nicht besonders beschränkt, sofern sie zumindest teilweise Aluminiumnitrid und/oder Aluminiumoxynitrid umfasst. Gemäß bestimmten Ausführungsformen umfasst die zumindest eine Faser zumindest teilweise Aluminiumnitrid. Das Aluminiumnitrid ermöglicht hierbei im Vergleich zum Aluminiumoxynitrid eine verbesserte Wärmeleitung.

Gemäß bestimmten Ausführungsformen liegt die zumindest eine Faser gerichtet vor, bevorzugt unidirektional gerichtet. Hierdurch ist die Fertigung des Verbundwerkstoffs vereinfacht, und die Wärmeabfuhr wird weiter verbessert. Darüber hinaus ist auch eine einfachere Wärmeabnahme bzw. ein einfacherer Wärmeübertrag möglich.

Gemäß bestimmten Ausführungsformen durchdringt die zumindest eine Faser die Matrix, liegt also an zwei, beispielsweise gegenüberliegenden, Oberflächen der Matrix offen vor. Hierdurch kann dann sowohl eine gute Wärmeaufnahme wie auch Wärmeabgabe an die Umgebung, beispielsweise weitere Bestandteile eines Bauteils oder die Umgebung, gewährleistet werden. Auch können natürlich mehrere Fasern an der Oberfläche der Matrix offen vorliegen, beispielsweise bei Geweben oder Faserbündeln. Bei beispielsweise Geweben muss hierbei auch nicht unbedingt gewährleistet werden, dass ein Faserende an der Oberfläche liegt, sondern es kann auch ein anderer Teil des Gewebes an einer freien Oberfläche vorliegen.

Gemäß bestimmten Ausführungsformen liegt zumindest ein Bündel von mehreren der zumindest einen Faser oder ein Fasergewebe umfassend mehrere der zumindest einen Faser vor. Hierdurch kann die Stabilität des Verbundwerkstoffs weiter verbessert werden sowie die Wärmeabfuhr. Auch ist die Möglichkeit eines Ausfalls der Funktion bei Faserbeschädigung verringert.

Auch können mehrere Faserbündel vorhanden sein, beispielsweise abhängig von der Größe des Verbundwerkstoffs.

Im Bündel ist die Anzahl der Fasern nicht besonders beschränkt. Beispielsweise können in einem Bündel 20 bis 2000, z.B. 100 bis 1500, z.B. 200 bis 1000 Fasern vorkommen. Beispielhaft sind Faserbündel mit 400 bis 600 Faserfilamenten oder 800 bis 1000 Faserfilamenten erhältlich, z.B. mit ungefähr 400 oder ungefähr 800 Fasern.

Gemäß bestimmten Ausführungsformen ist das Material der Matrix auch zwischen den Fasern eines Faserbündels und/oder in Zwischenräume eines Gewebes eingebracht.

Gemäß bestimmten Ausführungsformen besteht die zumindest eine Faser, bevorzugt zumindest ein Bündel von mehreren der zumindest einen Faser oder ein Fasergewebe umfassend mehrere der zumindest einen Faser, im Wesentlichen aus Aluminiumnitrid, und bevorzugt besteht die zumindest eine Faser, bevorzugt zumindest ein Bündel von mehreren der zumindest einen Faser oder ein Fasergewebe umfassend mehrere der zumindest einen Faser, aus Aluminiumnitrid. Hierdurch kann die Wärmeabfuhr weiter verbessert werden, und die Herstellung gestaltet sich einfacher.

Gemäß bestimmten Ausführungsformen umfasst die Matrix Aluminiumnitrid. Bevorzugt besteht die Matrix im Wesentlichen aus Aluminiumnitrid oder besteht sogar aus Aluminiumnitrid. Hierdurch kann ebenfalls die Herstellung vereinfacht werden. Zudem ist der Verbundwerkstoff einfacher zu handhaben und zeigt verbesserte Eigenschaften hinsichtlich einer elektrischen Isolation oder auch einer Beständigkeit auf.

Darüber hinaus kann der Verbundwerkstoff noch weitere Bestandteile umfassen, welche nicht besonders beschränkt sind. Es ist aber nicht ausgeschlossen, dass der Verbundwerkstoff im Wesentlichen nur aus der zumindest einen Faser und der Matrix besteht oder sogar nur aus der zumindest einen Faser und der Matrix besteht.

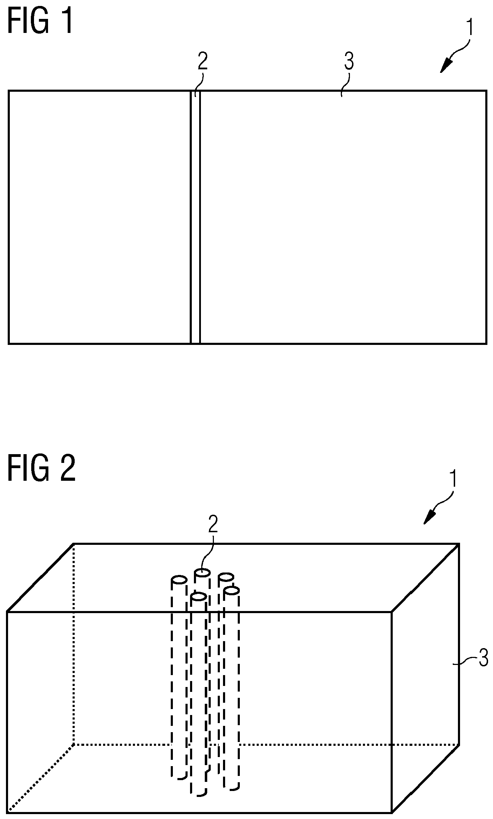

Gemäß bestimmten Ausführungsformen weist der Verbundwerkstoff eine Wandstärke im Bereich von 2 bis 5mm auf, bevorzugt 3 bis 5mm, besonders bevorzugt 4 bis 5mm, insbesondere 4,5 bis 5mm. Ein beispielhafter erfindungsgemäßer Verbundwerkstoff 1 ist schematisch in Figur 1 gezeigt, in der eine Faser 2, welche zumindest teilweise Aluminiumnitrid und/oder Aluminiumoxynitrid umfasst, die Matrix 3, welche zumindest teilweise ein Metallnitrid und/oder ein Metalloxynitrid umfasst, wobei das Metall ausgewählt ist aus Aluminium und/oder Silizium, durchdringt.

Ein weiterer beispielhafter erfindungsgemäßer Verbundwerkstoff 1 ist schematisch in Figur 2 gezeigt, wobei hier mehrere Fasern 2, welche zumindest teilweise Aluminiumnitrid und/oder Aluminiumoxynitrid umfassen, die Matrix 3, welche zumindest teilweise ein Metallnitrid und/oder ein Metalloxynitrid umfasst, wobei das Metall ausgewählt ist aus Aluminium und/oder Silizium, durchdringen, beispielsweise in Form eines Faserbündels.

Der erfindungsgemäße Verbundwerkstoff lässt sich insbesondere mit den nachfolgend angegebenen erfindungsgemäßen Verfahren herstellen, weshalb Ausführungen zum Verbundwerkstoff auch auf die Verfahren anzuwenden sind sowie vice versa.

Ein weiterer Aspekt der vorliegenden Erfindung ist auf ein Verfahren zum Herstellen eines Verbundwerkstoffs gerichtet, umfassend zumindest eine Faser, welche zumindest teilweise Aluminiumnitrid und/oder Aluminiumoxynitrid umfasst, sowie eine Matrix, welche zumindest teilweise ein Metallnitrid und/oder ein Metalloxynitrid umfasst, wobei das Metall ausgewählt ist aus Aluminium und/oder Silizium, das Verfahren umfassend:
- Bereitstellen von zumindest einer Faser, welche Aluminiumoxid umfasst;
- Bereitstellen eines Matrixmaterials, welches ein Metalloxid umfasst, wobei das Metall ausgewählt ist aus Aluminium und/oder Silizium;
- Vereinigen der zumindest einen Faser, welche Aluminiumoxid umfasst, mit dem Matrixmaterial, welches ein Metalloxid umfasst;
- Herstellen einer Matrix umfassend das Matrixmaterial, welches ein Metalloxid umfasst, in der die zumindest eine Faser, welche Aluminiumoxid umfasst, eingebracht ist; und
- zumindest teilweise Reduktion und Nitridierung des Matrixmaterials und der eingebrachten zumindest einen Faser.

Das Bereitstellen der zumindest einen Faser und des Matrixmaterials sind hierbei nicht besonders beschränkt, wie auch nicht das Vereinigen von beiden, welches beispielsweise über ein einfaches Zusammenbringen, auch beispielsweise in einer Form, erfolgen kann.

Gemäß bestimmten Ausführungsformen weist das Metalloxid bevorzugt eine Korngröße im Bereich von 0,1-0,5µm auf.

Das Herstellen der Matrix, in der die zumindest eine Faser eingebracht ist, ist ebenfalls nicht besonders beschränkt, und kann beispielsweise ein Vorsintern bei einer geeigneten Temperatur umfassen.

Auch die zumindest teilweise Reduktion und Nitridierung des Matrixmaterials und der eingebrachten zumindest einen Faser sind erfindungsgemäß nicht besonders beschränkt und können mit gängigen Reduktionsverfahren, beispielsweise einer chemischen und/oder elektrochemischen Reduktion, sowie einer geeigneten Umsetzung mit einer stickstoffhaltigen Substanz, beispielsweise einem Gas umfassend Stickstoff, beispielsweise Ammoniak, (sowie z.B. inerte Gase wie Edelgase) oder sogar im Wesentlichen reinen Stickstoff oder reinen Stickstoff durchgeführt werden.

Offenbart ist zudem ein Verfahren zum Herstellen eines Verbundwerkstoffs, umfassend zumindest eine Faser, welche zumindest teilweise Aluminiumnitrid und/oder Aluminiumoxynitrid umfasst,

sowie eine Matrix, welche zumindest teilweise ein Metallnitrid und/oder ein Metalloxynitrid umfasst, wobei das Metall ausgewählt ist aus Aluminium und/oder Silizium, das Verfahren umfassend:
- Bereitstellen von zumindest einer Faser, welche Aluminiumnitrid und/oder Aluminiumoxynitrid umfasst;
- Bereitstellen eines Matrixmaterials, welches ein Metalloxid umfasst, wobei das Metall ausgewählt ist aus Aluminium und/oder Silizium;
- Vereinigen der zumindest einen Faser, welche Aluminiumnitrid und/oder Aluminiumoxynitrid umfasst, mit dem Matrixmaterial, welches ein Metalloxid umfasst;
- Herstellen einer Matrix umfassend das Matrixmaterial, welches ein Metalloxid umfasst, in der die zumindest eine Faser, welche Aluminiumnitrid und/oder Aluminiumoxynitrid umfasst, eingebracht ist; und
- zumindest teilweise Reduktion und Nitridierung des Matrixmaterials.

Gemäß bestimmten Ausführungsformen kann auch die zumindest eine Faser teilweise oder vollständig reduziert und nitridiert werden, beispielsweise wenn die Faser Aluminiumoxynitrid umfasst. Gemäß bestimmten Ausführungsformen wird die zumindest eine Faser jedoch nicht reduziert und besteht beim Bereitstellen bereits im Wesentlichen aus Aluminiumnitrid oder besteht aus Aluminiumnitrid.

Das Bereitstellen der zumindest einen Faser und des Matrixmaterials sind hierbei nicht besonders beschränkt, wie auch nicht das Vereinigen von beiden, welches beispielsweise über ein einfaches Zusammenbringen, auch beispielsweise in einer Form, erfolgen kann.

Das Herstellen der Matrix, in der die zumindest eine Faser eingebracht ist, ist ebenfalls nicht besonders beschränkt, und kann beispielsweise ein Vorsintern bei einer geeigneten Temperatur umfassen.

Auch die zumindest teilweise Reduktion und Nitridierung des Matrixmaterials und optional der eingebrachten zumindest einen Faser sind erfindungsgemäß nicht besonders beschränkt und können mit gängigen Reduktionsverfahren, beispielsweise einer chemischen und/oder elektrochemischen Reduktion, sowie einer geeigneten Umsetzung mit einer stickstoffhaltigen Substanz, beispielsweise einem Gas umfassend Stickstoff, beispielsweise Ammoniak, (sowie z.B. inerte Gase wie Edelgase) oder sogar im Wesentlichen reinen Stickstoff oder reinen Stickstoff durchgeführt werden.

Des Weiteren ist ein Verfahren zum Herstellen eines Verbundwerkstoffs, umfassend zumindest eine Faser, welche zumindest teilweise Aluminiumnitrid und/oder Aluminiumoxynitrid umfasst, sowie eine Matrix, welche zumindest teilweise ein Metallnitrid und/oder ein Metalloxynitrid umfasst, wobei das Metall ausgewählt ist aus Aluminium und/oder Silizium, offenbart,
das Verfahren umfassend:
- Bereitstellen von zumindest einer Faser, welche Aluminiumoxid umfasst;
- Bereitstellen eines Matrixmaterials, welches zumindest teilweise ein Metallnitrid und/oder ein Metalloxynitrid umfasst, wobei das Metall ausgewählt ist aus Aluminium und/oder Silizium;
- Vereinigen der zumindest einen Faser, welche Aluminiumoxid umfasst, mit dem Matrixmaterial, welches zumindest teilweise ein Metallnitrid und/oder ein Metalloxynitrid umfasst;

- Herstellen einer Matrix umfassend das Matrixmaterial, welches zumindest teilweise ein Metallnitrid und/oder ein Metalloxynitrid umfasst, in der die zumindest eine Faser, welche Aluminiumoxid umfasst, eingebracht ist; und
- zumindest teilweise Reduktion und Nitridierung der eingebrachten zumindest einen Faser.

Gemäß bestimmten Ausführungsformen kann auch das Matrixmaterial teilweise oder vollständig reduziert und nitridiert werden, beispielsweise wenn das Matrixmaterial ein Metalloxynitrid und/oder Metalloxid umfasst. Gemäß bestimmten Ausführungsformen besteht das Matrixmaterial beim Bereitstellen im Wesentlichen aus Metallnitrid, insbesondere Aluminiumnitrid, oder besteht aus Metallnitrid, insbesondere Aluminiumnitrid, und muss folglich nicht reduziert und nitriert werden.

Das Bereitstellen der zumindest einen Faser und des Matrixmaterials sind hierbei nicht besonders beschränkt, wie auch nicht das Vereinigen von beiden, welches beispielsweise über ein einfaches Zusammenbringen, auch beispielsweise in einer Form, erfolgen kann.

Das Herstellen der Matrix, in der die zumindest eine Faser eingebracht ist, ist ebenfalls nicht besonders beschränkt, und kann beispielsweise ein Vorsintern bei einer geeigneten Temperatur umfassen.

Auch die zumindest teilweise Reduktion und Nitridierung der eingebrachten zumindest einen Faser und optional des Matrixmaterials sind erfindungsgemäß nicht besonders beschränkt und können mit gängigen Reduktionsverfahren, beispielsweise einer chemischen und/oder elektrochemischen Reduktion, sowie einer geeigneten Umsetzung mit einer stickstoffhaltigen Substanz, beispielsweise einem Gas umfassend Stickstoff, beispielsweise Ammoniak, (sowie z.B. inerte Gase wie Edelgase) oder sogar im Wesentlichen reinen Stickstoff oder reinen Stickstoff durchgeführt werden.

Offenbart ist darüber hinaus ein Verfahren zum Herstellen eines Verbundwerkstoffs, umfassend zumindest eine Faser, welche zumindest teilweise Aluminiumnitrid und/oder Aluminiumoxynitrid umfasst,

sowie eine Matrix, welche zumindest teilweise ein Metallnitrid und/oder ein Metalloxynitrid umfasst, wobei das Metall ausgewählt ist aus Aluminium und/oder Silizium, das Verfahren umfassend:
- Bereitstellen von zumindest einer Faser, welche Aluminiumnitrid und/oder Aluminiumoxynitrid umfasst;
- Bereitstellen eines Matrixmaterials, welches zumindest teilweise ein Metallnitrid und/oder ein Metalloxynitrid umfasst, wobei das Metall ausgewählt ist aus Aluminium und/oder Silizium;
- Vereinigen der zumindest einen Faser, welche Aluminiumnitrid und/oder Aluminiumoxynitrid umfasst, mit dem Matrixmaterial, welches zumindest teilweise ein Metallnitrid und/oder ein Metalloxynitrid umfasst;
- Herstellen einer Matrix umfassend das Matrixmaterial, welches zumindest teilweise ein Metallnitrid und/oder ein Metalloxynitrid umfasst, in der die zumindest eine Faser, welche Aluminiumnitrid und/oder Aluminiumoxynitrid umfasst, eingebracht ist; und
- optional zumindest teilweise Reduktion und Nitridierung des Matrixmaterials und/oder der eingebrachten zumindest einen Faser.

Gemäß bestimmten Ausführungsformen können hier die zumindest eine Faser und/oder das Matrixmaterial teilweise oder vollständig reduziert und nitridiert werden, beispielsweise wenn die Faser Aluminiumoxynitrid umfasst und/oder wenn das Matrixmaterial ein Metalloxynitrid und/oder Metalloxid umfasst. Gemäß bestimmten Ausführungsformen besteht die zumindest eine Faser im Wesentlichen aus Aluminiumnitrid und/oder besteht das Matrixmaterial im Wesentlichen aus Metallnitrid, insbesondere Aluminiumnitrid, oder es besteht die zumindest eine Faser aus Aluminiumnitrid und/oder das Matrixmaterial besteht aus Metallnitrid, insbesondere Aluminiumnitrid. Wenn sowohl die zumindest eine Faser im Wesentlichen aus Aluminiumnitrid besteht oder aus Aluminiumnitrid besteht und das Matrixmaterial im Wesentlichen aus Metallnitrid, insbesondere Aluminiumnitrid, besteht oder aus Metallnitrid, insbesondere Aluminiumnitrid, besteht, kann der optionale Schritt der zumindest teilweisen Reduktion und Nitridierung des Matrixmaterials und/oder der eingebrachten zumindest einen Faser in diesem Verfahren entfallen.

Das Bereitstellen der zumindest einen Faser und des Matrixmaterials sind hierbei nicht besonders beschränkt, wie auch nicht das Vereinigen von beiden, welches beispielsweise über ein einfaches Zusammenbringen, auch beispielsweise in einer Form, erfolgen kann.

Das Herstellen der Matrix, in der die zumindest eine Faser eingebracht ist, ist ebenfalls nicht besonders beschränkt, und kann beispielsweise ein Vorsintern bei einer geeigneten Temperatur umfassen.

Auch die zumindest teilweise Reduktion und Nitridierung des Matrixmaterials und der eingebrachten zumindest einen Faser sind erfindungsgemäß nicht besonders beschränkt und können mit gängigen Reduktionsverfahren, beispielsweise einer chemischen und/oder elektrochemischen Reduktion, sowie einer geeigneten Umsetzung mit einer stickstoffhaltigen Substanz, beispielsweise einem Gas umfassend Stickstoff, beispielsweise Ammoniak, (sowie z.B. inerte Gase wie Edelgase und/oder Wasserstoff, z.B. Formiergas umfassend N₂) oder sogar im Wesentlichen reinen Stickstoff oder reinen Stickstoff durchgeführt werden.

Gemäß bestimmten Ausführungsformen wird Kohlenstoff in das Pulvergemenge mit eingegeben, um die Carbonitridierung zu erleichtern.

Durch dieses letzte Verfahren ist also auch eine alternative Lösung zur Herstellung von beispielsweise AlN-Faserverbunden umfasst, bei dem beispielsweise AlN-Fasern mit AlN-Pulvern infiltriert werden und zu entsprechenden Bauteilen geformt werden.

Zu den verschiedenen Verfahren ist jedoch anzumerken, dass eine Prozessierung von AlN-Pulvern aufwändiger ist, da diese durch ihre hygroskopische Wirkung mit Luftfeuchtigkeit zu Ammoniak reagieren können, sodass Verfahren mit Verwendung von AlN-Pulvern weniger bevorzugt sind. Es ergibt sich dort ein hoher technischer Aufwand schon während der AlN-Formgebung. Auch sind Verfahren mit AlN-Fasern weniger bevorzugt als Verfahren ausgehend von Oxiden.

Gemäß bestimmten Ausführungsformen wird in den erfindungsgenmäßen Verfahren das Matrixmaterial als Pulver, bevorzugt mit Korngrößen in einem Bereich von 0,05 bis 2,0 pm, weiter bevorzugt von 0,08 bis 1,5 pm, insbesondere mit 0,1 µm oder mehr und 1,0 µm oder weniger, bereitgestellt, damit eine gute Infiltrierung von Faserbündeln und/oder Fasergewebe möglich ist. Die Korngrößen können hierbei mit geeigneten Methoden bestimmt werden, beispielsweise mittels Siebanalyse.

Gemäß bestimmten Ausführungsformen liegt die zumindest eine Faser, welche Aluminiumoxid umfasst, in den erfindungsgenmäßen Verfahren als zumindest ein Bündel von mehreren der zumindest einen Faser, welche Aluminiumoxid umfasst, oder als ein Fasergewebe umfassend mehrere der zumindest einen Faser, welche Aluminiumoxid umfasst, vor, wobei beim Herstellen der Matrix das Matrixmaterial, welches ein Metalloxid umfasst, auch zumindest teilweise oder sogar vollständig in Zwischenräume des zumindest einen Bündels oder in das Fasergewebe eingebracht wird. Hierbei kann bei der Vereinigung ein Faserbündel und/oder ein Fasergewebe mit Matrixmaterial infiltriert werden.

Gemäß bestimmten Ausführungsformen weisen Faserbündel und/oder Fasergewebe, so sie als die zumindest eine Faser in den erfindungsgemäßen Verfahren verwendet werden, eine geeignete Porosität auf, beispielsweise von 10 bis 35%, bevorzugt 15 bis 30%, insbesondere 20 bis 25%, um eine gute Infiltration beim Vereinigen mit dem Matrixmaterial zu gewährleisten. Die Porosität kann hierbei geeignet bestimmt werden, beispielsweise mit einem Porosimeter. Es wurde gefunden, dass die Matrix gemäß bestimmten Ausführungsformen nur schwach an die zumindest eine Faser bindet. Durch eine geeignete Porosität kann jedoch auch sichergestellt werden, dass Risse in der Matrix nicht unbedingt die zumindest eine Faser schädigen.

Gemäß bestimmten Ausführungsformen liegt die zumindest eine Faser in den erfindungsgenmäßen Verfahren als Faserbündel im Wesentlichen ohne Porosität oder ohne Porosität bzw. Zwischenräume vor, also als Bündel von Filamenten, was eine zusätzliche Stabilisierung der Faser ermöglicht und die Wärmeabfuhr verbessert.

Gemäß bestimmten Ausführungsformen ist die Reduktion in den erfindungsgenmäßen Verfahren eine carbothermische Reduktion. Die carbothermische Reduktion ist hierbei nicht besonders beschränkt und kann geeignet durchgeführt werden, beispielsweise bei einer geeigneten Temperatur mit einer kohlenstoffhaltigen Substanz wie Kohle, Russ, etc.

Gemäß bestimmten Ausführungsformen umfasst die Herstellung der Matrix in den erfindungsgenmäßen Verfahren ein Vorsintern bei einer Temperatur im Bereich von 1150 bis 1350°C, bevorzugt 1200 bis 1300°C. Hierdurch wird eine bessere Anbindung des Matrixmaterials an die zumindest eine Faser erreicht, insbesondere wenn noch ein Sinterprozess durchgeführt wird. Insbesondere findet das Vorsintern vor der Reduktion und Nitridierung statt. Gemäß bestimmten Ausführungsformen können vor der Vorsinterung auch weitere Verfahrensschritte durchgeführt werden, etwa ein Lay-up Prozess, ein Verdichten und/oder ein Trocknen, welche nicht besonders beschränkt sind. Beispielsweise kann ein Trocknen in einem Autoklav-Prozess erfolgen.

Gemäß bestimmten Ausführungsformen wird nach der Reduktion und Nitridierung in den erfindungsgenmäßen Verfahren die Matrix bzw. das Matrixmaterial umfassend die eingebrachte Faser gesintert, beispielsweise bei einer Temperatur von 1500 bis 2000°C, bevorzugt 1550 bis 1950°C, weiter bevorzugt bei einer Temperatur von 1600 bis 1900°C.

Insbesondere können durch das erfindungsgemäße Verfahren Verbundwerkstoffe und auch somit im Anschluss Bauteile und geometrische Strukturen endkonturnah über die oxidische Prozessroute hergestellt werden, um sie anschließend in einem weiteren Schritt bezüglich ihrer physikalischen Eigenschaften, hier insbesondere die Wärmeleitung, über die Nitridierung einzustellen. Durch die zusätzliche Verwendung von Fasern können somit - je nach ihrer Orientierung im Verbundmaterial - anisotrope Eigenschaften definiert eingestellt werden.

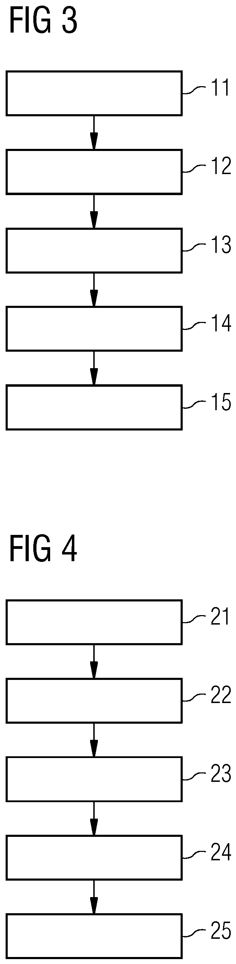

Beispielhafte erfindungsgemäße Verfahren sind schematisch in Figuren 3 bis 6 gezeigt.

In Figur 3 schließt sich an den Schritt 11 des Bereitstellens von zumindest einer Faser, welche Aluminiumoxid umfasst, ein Schritt 12 des Bereitstellens eines Matrixmaterials, welches ein Metalloxid umfasst, wobei das Metall ausgewählt ist aus Aluminium und/oder Silizium, an. Im Schritt 13 findet ein Vereinigen der zumindest einen Faser, welche Aluminiumoxid umfasst, mit dem Matrixmaterial, welches ein Metalloxid umfasst, statt, gefolgt in Schritt 14 vom Herstellen einer Matrix umfassend das Matrixmaterial, welches ein Metalloxid umfasst, in der die zumindest eine Faser, welche Aluminiumoxid umfasst, eingebracht ist, sowie im Schritt 15 der zumindest teilweise Reduktion und Nitridierung des Matrixmaterials und der eingebrachten zumindest einen Faser.

In Figur 4 schließt sich an den Schritt 21 des Bereitstellens von zumindest einer Faser, welche Aluminiumnitrid und/oder Aluminiumoxynitrid umfasst, ein Schritt 22 des Bereitstellens eines Matrixmaterials, welches ein Metalloxid umfasst, wobei das Metall ausgewählt ist aus Aluminium und/oder Silizium, an. Im Schritt 23 findet ein Vereinigen der zumindest einen Faser, welche Aluminiumnitrid und/oder Aluminiumoxynitrid umfasst, mit dem Matrixmaterial, welches ein Metalloxid umfasst, statt, gefolgt in Schritt 24 vom Herstellen einer Matrix umfassend das Matrixmaterial, welches ein Metalloxid umfasst, in der die zumindest eine Faser, welche Aluminiumnitrid und/oder Aluminiumoxynitrid umfasst, eingebracht ist, sowie im Schritt 25 der zumindest teilweise Reduktion und Nitridierung des Matrixmaterials.

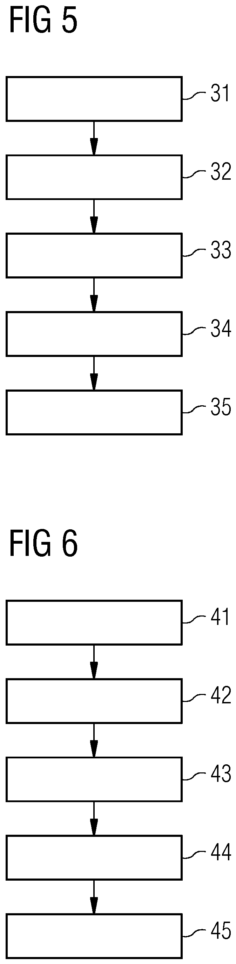

In Figur 5 schließt sich an den Schritt 31 des Bereitstellens von zumindest einer Faser, welche Aluminiumoxid umfasst, ein Schritt 32 des Bereitstellens eines Matrixmaterials, welches zumindest teilweise ein Metallnitrid und/oder ein Metalloxynitrid umfasst, wobei das Metall ausgewählt ist aus Aluminium und/oder Silizium, an. Im Schritt 33 findet ein Vereinigen der zumindest einen Faser, welche Aluminiumoxid umfasst, mit dem Matrixmaterial, welches zumindest teilweise ein Metallnitrid und/oder ein Metalloxynitrid umfasst, statt, gefolgt in Schritt 34 vom Herstellen einer Matrix umfassend das Matrixmaterial, welches zumindest teilweise ein Metallnitrid und/oder ein Metalloxynitrid umfasst, in der die zumindest eine Faser, welche Aluminiumoxid umfasst, eingebracht ist, sowie im Schritt 35 der zumindest teilweise Reduktion und Nitridierung der eingebrachten zumindest einen Faser.

In Figur 6 schließt sich an den Schritt 41 des Bereitstellens von zumindest einer Faser, welche Aluminiumnitrid und/oder Aluminiumoxynitrid umfasst, ein Schritt 42 des Bereitstellens eines Matrixmaterials, welches zumindest teilweise ein Metallnitrid und/oder ein Metalloxynitrid umfasst, wobei das Metall ausgewählt ist aus Aluminium und/oder Silizium, an. Im Schritt 43 findet ein Vereinigen der zumindest einen Faser, welche Aluminiumnitrid und/oder Aluminiumoxynitrid umfasst, mit dem Matrixmaterial, welches zumindest teilweise ein Metallnitrid und/oder ein Metalloxynitrid umfasst, statt, gefolgt in Schritt 44 vom Herstellen einer Matrix umfassend das Matrixmaterial, welches zumindest teilweise ein Metallnitrid und/oder ein Metalloxynitrid umfasst, in der die zumindest eine Faser, welche Aluminiumnitrid und/oder Aluminiumoxynitrid umfasst, eingebracht ist, sowie im optionalen Schritt 45 der zumindest teilweise Reduktion und Nitridierung des Matrixmaterials und/oder der eingebrachten zumindest einen Faser.

Ebenfalls offenbart ist ein durch ein erfindungsgemäßes Verfahren hergestellter Verbundwerkstoff.

Ein weiterer Aspekt der Erfindung ist auf ein Bauteil umfassend den erfindungsgemäßen Verbundwerkstoff gerichtet. Das Bauteil ist hierbei insbesondere ein elektrisches Bauteil.

Gemäß bestimmten Ausführungsformen ist das Bauteil ein Halbleiter oder ein Bauteil der Leistungs- und/oder Mikroelektronik oder ein Bauteil der Hochleistungselektronik, bevorzugt mit gerichteter Wärmeleitung. Gemäß bestimmten Ausführungsformen wird der erfindungsgemäße Verbundwerkstoff zumindest in einem Kühlkörper des Bauteils verwendet. Durch die Ausrichtung der zumindest einen Faser ist hierbei eine gezielte und gerichtete Wärmeabfuhr aus dem elektrischen Bauteil möglich. Insbesondere liegt hierbei zumindest eine Faser an weitere Bestandteile des Bauteils an, insbesondere solche, welche einer Wärmeabfuhr bei Betrieb bedürfen.

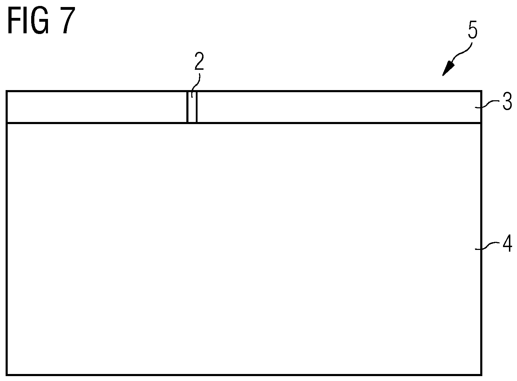

Ein beispielhaftes erfindungsgemäßes Bauteil 5 ist schematisch in Figur 7 gezeigt, wobei der Verbundwerkstoff aus Faser 2 und Matrix 3 an eine weitere Bauteilkomponente 4 anliegt, wobei die Faser derart ausgerichtet ist, dass sie Wärme von der weiteren Bauteilkomponente 4 an die Umgebung ableiten kann.

Ein weiterer Aspekt der vorliegenden Erfindung betrifft die Verwendung eines erfindungsgemäßen Verbundwerkstoffs zur Abfuhr von Wärme in einem Bauteil, insbesondere einem elektrischen Bauteil, wobei das elektrische Bauteil insbesondere ein Halbleiter oder ein Bauteil der Leistungs- und/oder Mikroelektronik oder ein Bauteil der Hochleistungselektronik ist.

Die Abfuhr bzw. Ableitung von Wärme kann hierbei zu einem großen Teil über die zumindest eine Faser erfolgen.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

Es wurden beispielhafte keramische Faserverbundwerkstoffe (CMCs) hergestellt, in denen keramischen Fasern aus Al₂O₃, welche kommerziell erhältlich sind (beispielsweise Nextel™ von 3M™) als unidirektionale Fasern oder Fasergewebe in eine Matrix mit einem Matrixmaterial aus Al₂O₃ in Form von Pulvern eingebracht waren. Über einen Schlicker wurde das Pulver in das Gewebe eingearbeitet. Das infiltrierte Fasergewebe wurde in einem Lay-up Prozess aufgebaut, anschließend verdichtet und getrocknet (Autoklav-Prozess) und abschließend vorgesintert. In einem ersten Zwischenschritt wurde so ein vorgesinterter Verbund aus Al₂O₃-Fasern und Al₂O₃-Matrix hergestellt.

In einer weiteren Temperaturbehandlung wurde das gesinterte Bauteil in einem Ofen unter stark reduzierender Atmosphäre (N₂ oder Formiergas mit N₂) in AlN umgewandelt. Dabei wurde durch eine carbothermische Reduktion dem Al₂O₃ der Sauerstoff entzogen und durch die Zugabe von N₂ (Nitridierung) die Bildung von AlN gefördert. Hierbei können sowohl die Al₂O₃-Matrix als auch die Al₂O₃-Faser in AlN umgewandelt werden und ein Verbundmaterial aus AlN-Fasern in AlN-Matrix entstehen. Während die AlN-Matrix weiterhin isotrope Wärmeleitung zeigt, kann der Wärmetransport in der AlN-Faser verstärkt entlang der Fasern (anisotrop) erfolgen.

Auf diese Weise können großvolumige Komponenten mit dicken Wandstärken hergestellt werden, deren Querschnitt große Energiemengen gerichtet transportieren können. Dieser gesteuerte Wärmetransport ermöglicht Baugruppen zu verkleinern, da Zusatzgeräte wie beispielsweise Ölpumpen und Flüssigkeitsbehälter, die den Wärmetransport vorher reguliert haben, wegfallen.

Für eine Untersuchung der hergestellten Verbundwerkstoffe wurde in einer Probe 1 und einer Probe 2 ein CMC basierend auf Al₂O-Faserbündeln und Al₂O₃-Matrix, der carbonitriert wurde, geschliffen und unter Stickstoff gelagert. Als Vergleichsprobe 1 diente ein Verbundwerkstoff, der nicht carbonitiert wurde, sowie als Vergleichsprobe 2 ein carbonitierter Werkstoff ohne Faserbündel.

Die Carbonitierung erfolgte für 4 Stunden bei 1700°C (Probe 1) oder 1800°C (Probe 2) mit Stickstoff zum Nitrieren.

Beim Schleifen der Proben 1 und 2 ergab sich im Vergleich zu den Vergleichsproben eine schnelle Erwärmung entlang der Faserrichtung, sodass ca. alle 15 s mit Druckluft gekühlt wurde, wodurch die anisotrope Wärmeleitung bei Proben 1 und 2 bestätigt werden konnte.

Die Proben 1 und 2 wurden im Anschluss mittels EDX (Energiedispersive Röntgenspektroskopie) und REM (Rasterelektronen-Mikroskopie) untersucht. Es fanden sich hierbei zu einem großen Teil AlON-Phasen sowie auch in geringem Umfang AlN-Phasen. Bei den Fasern befanden sich größere Kristallite insbesondere im Randbereich.

Die Herstellung von Bauteilen über die Faserverbundroute ermöglicht, Komponenten mit dicken Wandstärken zu fertigen. Bauteile können direkt über die AlN-Pulverroute (ohne Fasern) nur bis zu einer kritischen Wandstärke gefertigt werden, da durch die Sinterung Risse entstehen können. Solche Bauteile zeigen zudem ausschließlich isotrope Wärmeleitungseigenschaften.

Durch die Verwendung von Fasern, insbesondere Fasergeweben oder unidirektionalen Faserbündeln, kann die Wärmeabflussrichtung gezielt durch die Orientierung der Fasern im Bauteil gesteuert werden, und anisotrope Eigenschaften können eingestellt werden. Zudem sind insbesondere Rohstoffe für bevorzugte erfindungsgemäße Verfahren wie Al₂O₃- Pulver und Al₂O₃-Fasern in einem breiten Spektrum bzgl. Korngrößenverteilung (Nano- bis Mikronpulver) und Reinheit, sowie unterschiedlichsten Gewebearten und Faserbündelstärken kommerziell erhältlich.

## Patentansprüche

1. Verbundwerkstoff, umfassend
zumindest eine Faser, welche zumindest teilweise Aluminiumnitrid und/oder Aluminiumoxynitrid umfasst,
sowie eine Matrix, welche zumindest teilweise ein Metallnitrid und/oder ein Metalloxynitrid umfasst, wobei das Metall ausgewählt ist aus Aluminium und/oder Silizium.

2. Verbundwerkstoff nach Anspruch 1, wobei die zumindest eine Faser gerichtet vorliegt.

3. Verbundwerkstoff nach Anspruch 1 oder 2, wobei zumindest ein Bündel von mehreren der zumindest einen Faser oder ein Fasergewebe umfassend mehrere der zumindest einen Faser vorliegt.

4. Verbundwerkstoff nach einem der vorgehenden Ansprüche, wobei die zumindest eine Faser zumindest teilweise Aluminiumnitrid umfasst.

5. Verbundwerkstoff nach Anspruch 4, wobei die zumindest eine Faser im Wesentlichen aus Aluminiumnitrid besteht.

6. Verbundwerkstoff nach einem der vorgehenden Ansprüche, wobei die Matrix Aluminiumnitrid umfasst.

7. Verfahren zum Herstellen eines Verbundwerkstoffs, umfassend
zumindest eine Faser, welche zumindest teilweise Aluminiumnitrid und/oder Aluminiumoxynitrid umfasst,
sowie eine Matrix, welche zumindest teilweise ein Metallnitrid und/oder ein Metalloxynitrid umfasst, wobei das Metall ausgewählt ist aus Aluminium und/oder Silizium, umfassend:
- Bereitstellen von zumindest einer Faser, welche Aluminiumoxid umfasst;
- Bereitstellen eines Matrixmaterials, welches ein Metalloxid umfasst, wobei das Metall ausgewählt ist aus Aluminium und/oder Silizium;
- Vereinigen der zumindest einen Faser, welche Aluminiumoxid umfasst, mit dem Matrixmaterial, welches ein Metalloxid umfasst;
- Herstellen einer Matrix umfassend das Matrixmaterial, welches ein Metalloxid umfasst, in der die zumindest eine Faser, welche Aluminiumoxid umfasst, eingebracht ist; und
- zumindest teilweise Reduktion und Nitridierung des Matrixmaterials und der eingebrachten zumindest einen Faser;
oder
- Bereitstellen von zumindest einer Faser, welche Aluminiumnitrid und/oder Aluminiumoxynitrid umfasst;
- Bereitstellen eines Matrixmaterials, welches ein Metalloxid umfasst, wobei das Metall ausgewählt ist aus Aluminium und/oder Silizium;
- Vereinigen der zumindest einen Faser, welche Aluminiumnitrid und/oder Aluminiumoxynitrid umfasst, mit dem Matrixmaterial, welches ein Metalloxid umfasst;
- Herstellen einer Matrix umfassend das Matrixmaterial, welches ein Metalloxid umfasst, in der die zumindest eine Faser, welche Aluminiumnitrid und/oder Aluminiumoxynitrid umfasst, eingebracht ist; und
- zumindest teilweise Reduktion und Nitridierung des Matrixmaterials;
oder
- Bereitstellen von zumindest einer Faser, welche Aluminiumoxid umfasst;
- Bereitstellen eines Matrixmaterials, welches zumindest teilweise ein Metallnitrid und/oder ein Metalloxynitrid umfasst, wobei das Metall ausgewählt ist aus Aluminium und/oder Silizium;
- Vereinigen der zumindest einen Faser, welche Aluminiumoxid umfasst, mit dem Matrixmaterial, welches zumindest teilweise ein Metallnitrid und/oder ein Metalloxynitrid umfasst;
- Herstellen einer Matrix umfassend das Matrixmaterial, welches zumindest teilweise ein Metallnitrid und/oder ein Metalloxynitrid umfasst, in der die zumindest eine Faser, welche Aluminiumoxid umfasst, eingebracht ist; und
- zumindest teilweise Reduktion und Nitridierung der eingebrachten zumindest einen Faser;
oder
- Bereitstellen von zumindest einer Faser, welche Aluminiumnitrid und/oder Aluminiumoxynitrid umfasst;
- Bereitstellen eines Matrixmaterials, welches zumindest teilweise ein Metallnitrid und/oder ein Metalloxynitrid umfasst, wobei das Metall ausgewählt ist aus Aluminium und/oder Silizium;
- Vereinigen der zumindest einen Faser, welche Aluminiumnitrid und/oder Aluminiumoxynitrid umfasst, mit dem Matrixmaterial, welches zumindest teilweise ein Metallnitrid und/oder ein Metalloxynitrid umfasst;
- Herstellen einer Matrix umfassend das Matrixmaterial, welches zumindest teilweise ein Metallnitrid und/oder ein Metalloxynitrid umfasst, in der die zumindest eine Faser, welche Aluminiumnitrid und/oder Aluminiumoxynitrid umfasst, eingebracht ist; und
- optional zumindest teilweise Reduktion und Nitridierung des Matrixmaterials.

8. Verfahren nach Anspruch 7,
wobei die Reduktion eine carbothermische Reduktion ist.

9. Verfahren nach Anspruch 7 oder 8, wobei die Herstellung der Matrix ein Vorsintern bei einer Temperatur im Bereich von 1150 bis 1350°C, bevorzugt 1200 bis 1300°C, umfasst.

10. Verfahren nach einem der Ansprüchen 7 bis 9, wobei die zumindest eine Faser, welche Aluminiumoxid umfasst, als zumindest ein Bündel von mehreren der zumindest einen Faser, welche Aluminiumoxid umfasst, oder als ein Fasergewebe umfassend mehrere der zumindest einen Faser, welche Aluminiumoxid umfasst, vorliegt, wobei beim Herstellen der Matrix das Matrixmaterial, welches ein Metalloxid umfasst, auch zumindest teilweise in Zwischenräume des Bündels oder in das Fasergewebe eingebracht wird.

11. Verfahren nach einem der Ansprüche 7 bis 10, wobei nach der Reduktion und Nitridierung die Matrix umfassend die eingebrachte Faser gesintert wird, bevorzugt bei einer Temperatur von 1600 bis 1900°C.

12. Bauteil, umfassend einen Verbundwerkstoff nach einem der Ansprüche 1 bis 6, wobei das Bauteil insbesondere ein elektrisches Bauteil ist.

13. Bauteil nach Anspruch 12, wobei das elektrische Bauteil ein Halbleiter oder ein Bauteil der Leistungs- und/oder Mikroelektronik oder ein Bauteil der Hochleistungselektronik ist, wobei der Verbundwerkstoff zumindest in einem Kühlkörper, bevorzugt mit gerichteter Wärmeleitung, verwendet wird.

14. Verwendung eines Verbundwerkstoffs nach einem der Ansprüche 1 bis 6 zur Abfuhr von Wärme in einem Bauteil, wobei das Bauteil insbesondere ein Halbleiter oder ein Bauteil der Leistungs- und/oder Mikroelektronik oder ein Bauteil der Hochleistungselektronik ist.
